# EUROPEAN PATENT APPLICATION

(11) **EP 4 800 867 A1**
(43) Date of publication of application: **02.09.2026**
(21) Application number: 26160876.4
(22) Date of filing: 26.02.2026
(51) Int. Cl.: H02J 3/14, C25B 1/04, C25B 15/023, H02J 4/20, C25B 15/02

(54) **HYDROGEN PRODUCTION SYSTEM, HYDROGEN PRODUCTION METHOD, AND PROGRAM**

(30) Priority: 27.02.2025 JP 2025030629
(71) Applicant: DENSO CORPORATION, Kariya-city, Aichi-pref. 448-8661 (JP)
(72) Inventor: UMEDA, Hiroaki, Kariya-city, Aichi-pref., 448-8661 (JP); KABEYA, Satoki, Kariya-city, Aichi-pref., 448-8661 (JP); OHIRA, Koji, Kariya-city, Aichi-pref., 448-8661 (JP)
(74) Representative: TBK

(57) **Abstract**

A hydrogen production system (1) of the present disclosure includes a plurality of electrolyzers (2) which produce hydrogen by electrolyzing a raw material, a plurality of power converters (3) which convert three-phase AC power into DC power and supply the DC power to the plurality of electrolyzers, and a control device (4) which controls the plurality of power converters. Each electrolyzer is connected to a different one of the power converters. The control device is configured to individually control a current or a voltage supplied from the plurality of power converters to each electrolyzer by individually controlling the plurality of power converters. The control device is configured to control the current or the voltage supplied from the power converter to a measured electrolyzer (2S) based on a detection value detected by at least one detection unit of an inlet gas state detection unit (141), an outlet gas state detection unit (142), and a power supply physical quantity detection unit (143).

## Description

### BACKGROUND OF THE INVENTION

### 1. Technical Field

The present disclosure relates to a hydrogen production system, a hydrogen production method, and a program.

### 2. Related Art

As a system for producing hydrogen, there is a hydrogen production system that produces hydrogen by electrolyzing a raw material such as water. Such a hydrogen production system includes, for example, as described in JP 6704998 B (Japanese Patent No. 6,704,998), an electrolysis cell stack that electrolyzes the raw material to extract hydrogen, and a power source that supplies power to the electrolysis cell stack.

### SUMMARY OF THE INVENTION

However, the above-described hydrogen production system has the following points for improvement. For example, in order to achieve increasing the production of hydrogen (improving production performance of hydrogen), a configuration including a plurality of electrolyzers can be considered.

Since each electrolyzer has an upper limit value of suppliable current (upper limit current) due to constraints of an upper limit temperature, it is necessary to set the supply current within a range that does not exceed this upper limit current. On the other hand, when a power source is connected to the plurality of electrolyzers connected in parallel with each other to supply power to the plurality of electrolyzers, it becomes difficult to individually adjust the current supplied to each electrolyzer. Therefore, if an attempt is made to limit the supply current so as not to exceed the upper limit current for each electrolyzer, it becomes difficult to achieve increasing the production of hydrogen.

The present disclosure has been made in view of such points, and provides a hydrogen production system, a hydrogen production method, and a program capable of improving production performance of hydrogen (increasing a producible amount of hydrogen).

A hydrogen production system (1) as a first aspect of the technology of the present disclosure includes a plurality of electrolyzers (2, 21, 22), a plurality of power converters (3, 31, 32), and a control device (4). The plurality of electrolyzers produce hydrogen by electrolyzing a raw material. The plurality of power converters convert three-phase AC power into DC power and supply the DC power to the plurality of electrolyzers. The control device controls the plurality of power converters. Each electrolyzer is connected to a different one of the power converters. At least one of the plurality of electrolyzers is a measured electrolyzer (2S) provided with at least one detection unit of an inlet gas state detection unit (141), an outlet gas state detection unit (142), and a power supply physical quantity detection unit (143). The inlet gas state detection unit detects a physical quantity indicating an inlet gas state. The outlet gas state detection unit detects a physical quantity indicating an outlet gas state. The power supply physical quantity detection unit detects a physical quantity of the supplied DC power. The control device is configured to individually control a current or a voltage supplied from the plurality of power converters to each electrolyzer by individually controlling the plurality of power converters. The control device is configured to control the current or the voltage supplied from the power converter to the measured electrolyzer based on a detection value detected by at least one detection unit of the inlet gas state detection unit, the outlet gas state detection unit, and the power supply physical quantity detection unit.

A hydrogen production method as a second aspect of the technology of the present disclosure produces hydrogen by using a hydrogen production system (1). The hydrogen production system includes a plurality of electrolyzers (2, 21, 22) and a plurality of power converters (3, 31, 32). The plurality of electrolyzers produce hydrogen by electrolyzing a raw material. The plurality of power converters convert three-phase AC power into DC power and supply the DC power to the plurality of electrolyzers. Each electrolyzer is connected to a different one of the power converters. At least one of the plurality of electrolyzers is a measured electrolyzer (2S) provided with at least one detection unit of an inlet gas state detection unit (141), an outlet gas state detection unit (142), and a power supply physical quantity detection unit (143). The inlet gas state detection unit detects a physical quantity indicating an inlet gas state. The outlet gas state detection unit detects a physical quantity indicating an outlet gas state. The power supply physical quantity detection unit detects a physical quantity of the supplied DC power. The hydrogen production method individually controls a current or a voltage supplied from the plurality of power converters to each electrolyzer by individually controlling the plurality of power converters. The hydrogen production method controls the current or the voltage supplied from the power converter to the measured electrolyzer based on a detection value detected by at least one detection unit of the inlet gas state detection unit, the outlet gas state detection unit, and the power supply physical quantity detection unit.

A program as a third aspect of the technology of the present disclosure is executed when hydrogen is produced by using a hydrogen production system (1). The hydrogen production system includes a plurality of electrolyzers (2, 21, 22), a plurality of power converters (3, 31, 32), and a control device (4). The plurality of electrolyzers produce hydrogen by electrolyzing a raw material. The plurality of power converters convert three-phase AC power into DC power and supply the DC power to the plurality of electrolyzers. The control device controls the plurality of power converters. Each electrolyzer is connected to a different one of the power converters. At least one of the plurality of electrolyzers is a measured electrolyzer (2S) provided with at least one detection unit of an inlet gas state detection unit (141), an outlet gas state detection unit (142), and a power supply physical quantity detection unit (143). The inlet gas state detection unit detects a physical quantity indicating an inlet gas state. The outlet gas state detection unit detects a physical quantity indicating an outlet gas state. The power supply physical quantity detection unit detects a physical quantity of the supplied DC power. The program is a program for causing the control device to execute control of the plurality of power converters when hydrogen is produced by using the hydrogen production system. The program causes the control device to execute individual control of a current or a voltage supplied from the plurality of power converters to each electrolyzer by causing the control device to execute individual control of the plurality of power converters. The program causes the control device to execute control of the current or the voltage supplied from the power converter to the measured electrolyzer based on a detection value detected by at least one detection unit of the inlet gas state detection unit, the outlet gas state detection unit, and the power supply physical quantity detection unit.

In the above-described hydrogen production system, each electrolyzer is connected to a different power converter. Then, the control device individually controls the plurality of power converters. Accordingly, the present system can individually control the current or the voltage supplied from the plurality of power converters to each electrolyzer. Therefore, the present system can expand a suppliable range of the current or the voltage supplied to each electrolyzer (can improve the flexibility of supply control for the current or the voltage). As a result, it is possible to improve the production performance of hydrogen, which is produced by the plurality of electrolyzers (it becomes possible to increase the producible amount of hydrogen).

Further, at least one of the plurality of electrolyzers is the above-described measured electrolyzer. Then, the control device is configured to control the current or the voltage supplied to the measured electrolyzer based on the detection value detected by at least one detection unit of the inlet gas state detection unit, the outlet gas state detection unit, and the power supply physical quantity detection unit. Therefore, the present system can supply an appropriate current or voltage to the measured electrolyzer while identifying a suppliable current or voltage for the measured electrolyzer according to a gas state. As a result, the present system can increase the producible amount of hydrogen by the measured electrolyzer. Accordingly, even as the entire system is considered, the producible amount of hydrogen can be increased, and the production performance of hydrogen can be easily improved.

As described above, according to the above aspects, it is possible to provide a hydrogen production system, a hydrogen production method, and a program that can improve production performance of hydrogen (can increase a producible amount of hydrogen). Note that reference signs in parentheses described above indicate correspondence with specific means described in embodiments to be described later, and do not limit the technical interpretation of the present disclosure.

### BRIEF DESCRIPTION OF THE DRAWINGS

In the accompanying drawings:
FIG. 1 is an explanatory diagram of a hydrogen production system in a first embodiment;
FIG. 2 is a block diagram illustrating a control function in the first embodiment;
FIG. 3 is a flowchart illustrating a control process in the first embodiment;
FIG. 4 is a flowchart illustrating a calculation process for an upper limit current in the first embodiment;
FIG. 5 is a flowchart illustrating a calculation process for a target current in the first embodiment;
FIG. 6 is an explanatory diagram of a hydrogen production system in a comparative embodiment;
FIG. 7 is an explanatory diagram of technical effects in the first embodiment;
FIG. 8 is an explanatory diagram of a hydrogen production system in a second embodiment;
FIG. 9 is an explanatory diagram of a circuit of a power converter in a third embodiment; and
FIG. 10 is an explanatory diagram of a circuit of a power converter in a fourth embodiment.

### DETAILED DESCRIPTION OF THE PREFERRED EMBODIMENTS

### (First Embodiment)

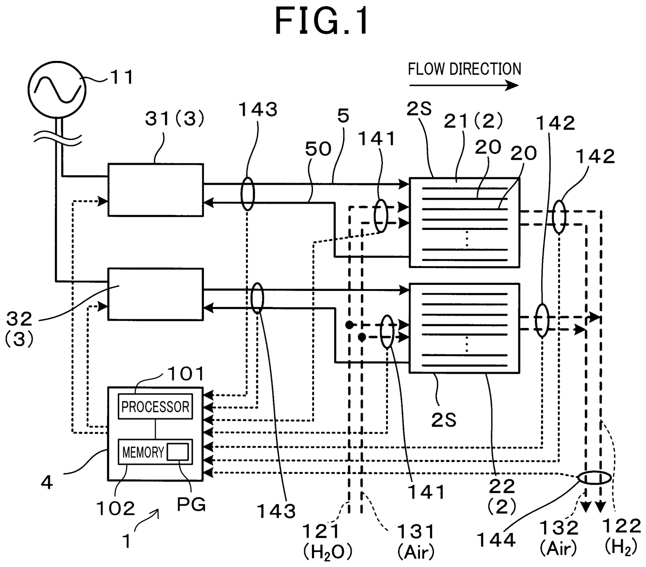

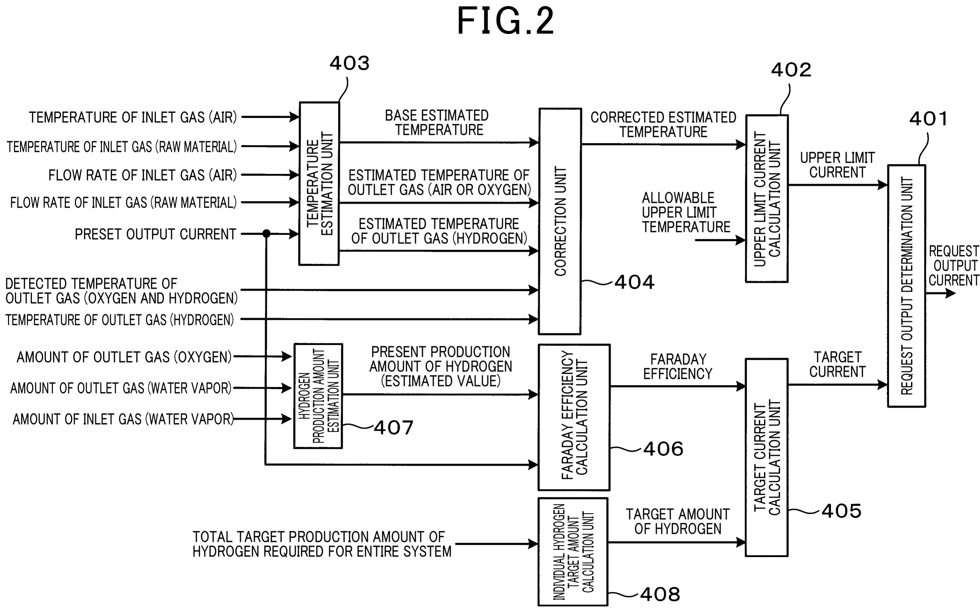

A first embodiment relating to a hydrogen production system, a hydrogen production method, and a program will be described with reference to FIG. 1 and FIG. 2. As shown in FIG. 1, the hydrogen production system 1 of the present embodiment includes a plurality of electrolyzers 2 (electrolytic devices), a plurality of power converters 3 (electrical power conversion devices), a control device 4, and power supply wirings 5, 50. In addition, each power converter 31, 32 of the hydrogen production system 1 is connected to a three-phase AC power source 11.

The plurality of electrolyzers 2 produce hydrogen by electrolyzing a raw material. The plurality of power converters 3 convert three-phase AC power into DC power and supply the DC power to the plurality of electrolyzers 2. The control device 4 individually controls the plurality of power converters 3.

To each of the electrolyzers 21, 22, a different one of the power converters 3 is connected. The hydrogen production system 1 of the present embodiment includes two electrolyzers 21, 22 (a first electrolyzer 21 and a second electrolyzer 22) and two power converters 31, 32 (a first power converter 31 and a second power converter 32). Then, the first power converter 31 is connected to the first electrolyzer 21 via the power supply wirings 5, 50. The second power converter 32 is connected to the second electrolyzer 22 via other power supply wirings 5, 50. Note that the power supply wiring 5 corresponds to a high-potential side wiring, and the power supply wiring 50 corresponds to a low-potential side wiring.

At least one of the plurality of electrolyzers 2 is a measured electrolyzer 2S. Here, the measured electrolyzer 2S is an electrolyzer provided with at least one detection unit of an inlet gas state detection unit 141, an outlet gas state detection unit 142, and a power supply physical quantity detection unit 143. The inlet gas state detection unit 141 detects a physical quantity indicating an inlet gas state. The outlet gas state detection unit 142 detects a physical quantity indicating an outlet gas state. The power supply physical quantity detection unit 143 detects a physical quantity of the supplied DC power. In the present embodiment, each of the two electrolyzers 21, 22 corresponds to the measured electrolyzer 2S. Then, each of the two electrolyzers 21, 22 is provided with all of the inlet gas state detection unit 141, the outlet gas state detection unit 142, and the power supply physical quantity detection unit 143.

Here, the phrase that "the inlet gas state detection unit 141, the outlet gas state detection unit 142, and the power supply physical quantity detection unit 143 are provided" corresponds to a configuration in which these detection units are directly provided on the electrolyzer 2 itself. Other configurations include, for example, a configuration in which the detection units are indirectly provided on the electrolyzer 2 by being provided in various flow paths connected to the electrolyzer 2. Furthermore, for example, a configuration in which the detection units are provided in an inlet gas flow path (that is, a raw material supply flow path 121 or an air supply flow path 131), an outlet gas flow path (that is, a hydrogen discharge flow path 122 or an air discharge flow path 132), or the power supply wirings 5, 50 is also included in the configuration in which the detection units are provided on the electrolyzer 2.

The control device 4 is configured to control a current or a voltage supplied to the measured electrolyzer 2S based on a detection value detected by at least one detection unit of the inlet gas state detection unit 141, the outlet gas state detection unit 142, and the power supply physical quantity detection unit 143. In the present embodiment, as will be described later, the current supplied to the measured electrolyzer 2S is controlled by using all detection values of the inlet gas state detection unit 141, the outlet gas state detection unit 142, and the power supply physical quantity detection unit 143 (see FIG. 2).

As shown in FIG. 1, each of the first and second electrolyzers 21, 22 has a cell stack formed by stacking a plurality of electrolysis cells 20. In the present embodiment, the electrolysis cell 20 corresponds to an SOEC (Solid Oxide Electrolyzer Cell). Each electrolysis cell 20 is provided with an air electrode and a hydrogen electrode, and further includes an electrolyte interposed between the hydrogen electrode and the air electrode. The plurality of electrolysis cells 20 are connected in series with each other to constitute the cell stack.

In the present embodiment, a gas containing water vapor is supplied to the hydrogen electrode. Air is supplied to the air electrode. That is, water as a raw material is supplied to the hydrogen electrode in a state of water vapor. The water vapor is introduced into the electrolyzer 2 through the raw material supply flow path 121 and is supplied to the hydrogen electrode of each electrolysis cell 20. The air is introduced into the electrolyzer 2 through the air supply flow path 131 and is supplied to the air electrode of each electrolysis cell 20.

The electrolyte of the electrolysis cell 20 is made of a solid oxide ceramic and has conductivity of oxide ions (O²⁻). The electrolyte can be configured using, for example, yttria-stabilized zirconia, a perovskite oxide, or the like. Then, after bringing the electrolyte into a high temperature state of, for example, 600°C to 800°C, power is supplied between the air electrode and the hydrogen electrode to cause an electrolysis reaction of the water vapor. Thereby, hydrogen is produced at the hydrogen electrode, and oxygen is produced at the oxygen electrode.

That is, for the water vapor supplied to the electrolysis cell 20, an electrolysis reaction of [H₂O + 2e⁻ → H₂ + O²⁻] occurs at the hydrogen electrode. Further, at the air electrode, a reaction of [O²⁻ → 1/2O₂ + 2e⁻] occurs. That is, at the hydrogen electrode, the water vapor is electrolyzed, and hydrogen gas and oxide ions (O²⁻) are generated. The oxide ions migrate toward the air electrode side through the electrolyte and are oxidized at the air electrode to become oxygen gas.

A gas containing hydrogen produced by the above electrolysis reaction is discharged from the hydrogen electrode to the outside of the electrolysis cell 20, and is discharged from the electrolyzer 2 through the hydrogen discharge flow path 122. In addition, a gas containing the produced oxygen is also discharged from the air electrode to the outside of the electrolysis cell 20, and is discharged from the electrolyzer 2 through the air discharge flow path 132.

Further, in the present embodiment, the power converter 3 supplies power to the electrolyzer 2. Specifically, the power converter 3 converts three-phase AC power supplied from the three-phase AC power source 11 shown in FIG. 1 into DC power, and supplies the DC power to the cell stack of the electrolyzer 2. As described above, this DC power is supplied between the air electrode and the hydrogen electrode of each electrolysis cell 20.

The control device 4 has a microcomputer including a processor 101, a memory 102, and the like, and peripheral circuits thereof. The control device 4 controls driving of the power converter 3. That is, the control device 4 controls at least one of current and voltage of the plurality of power converters 3. The control device 4 may be configured by a plurality of microcomputers and peripheral devices thereof. Further, the microcomputer may be configured by a computer including one or more processors. In the present embodiment, as examples of the drive control of the power converter 3, the control device 4 controls the current of the power converter 3. Then, as described above, the control device 4 controls the current supplied to the measured electrolyzer 2S by using all detection values of the inlet gas state detection unit 141, the outlet gas state detection unit 142, and the power supply physical quantity detection unit 143.

The inlet gas state detection unit 141 is configured to detect at least one physical quantity related to a flow rate, pressure, temperature, and concentration of at least one gas component of hydrogen, oxygen, and water vapor in the inlet gas. The inlet gas state detection unit 141 is electrically connected to the control device 4 and outputs (submits) a detection value as an electrical signal to the control device 4. Note that the flow rate may be a mass flow rate or a volume flow rate. Further, the concentration may be a molar concentration or a volume concentration. The inlet gas state detection unit 141 is provided in at least one of the raw material supply flow path 121 and the air supply flow path 131. In the present embodiment, the inlet gas state detection unit 141 is provided in both the raw material supply flow path 121 and the air supply flow path 131.

The inlet gas state detection unit 141 is provided in each of the first and second electrolyzers 21, 22. That is, the raw material supply flow path 121 branches and is connected to each of the first and second electrolyzers 21, 22. The air supply flow path 131 also branches and is connected to each of the first and second electrolyzers 21, 22. The inlet gas state detection unit 141 is disposed between a branch point of the air supply flow path 131 and the first electrolyzer 21 and between the branch point and the second electrolyzer 22, respectively.

The outlet gas state detection unit 142 is configured to detect at least one physical quantity related to a flow rate, pressure, temperature, and concentration of at least one gas component of hydrogen, oxygen, and water vapor in the outlet gas. The outlet gas state detection unit 142 is electrically connected to the control device 4 and outputs (submits) a detection value as an electrical signal to the control device 4. The meanings of the flow rate and concentration here are the same as in the case of the inlet gas. The outlet gas state detection unit 142 is provided in at least one of the hydrogen discharge flow path 122 and the air discharge flow path 132. In the present embodiment, the outlet gas state detection unit 142 is provided in both the hydrogen discharge flow path 122 and the air discharge flow path 132.

The outlet gas state detection unit 142 is provided in each of the first and second electrolyzers 21, 22. That is, the hydrogen discharge flow path 122 is connected to each of the first and second electrolyzers 21, 22, and merges downstream in a flow direction of hydrogen. The air discharge flow path 132 is connected to each of the first and second electrolyzers 21, 22, and merges downstream in a flow direction of air. The outlet gas state detection unit 142 is disposed upstream in each flow direction of hydrogen and air, than a merging point of the hydrogen outlet flow paths 122 and a merging point of the air discharge flow paths 132. That is, the outlet gas state detection unit 142 is disposed in each of the hydrogen discharge flow path 122 and the air discharge flow path 132, which is located between the first electrolyzer 21 and the above merging points. The outlet gas state detection unit 142 is also disposed in each of the hydrogen discharge flow path 122 and the air discharge flow path 132, which is located between the second electrolyzer 22 and the above merging points.

The power supply physical quantity detection unit 143 is configured to detect the physical quantity of DC power supplied from the power converter 3 to the electrolyzer 2. The power supply physical quantity detection unit 143 is electrically connected to the control device 4 and outputs (submits) a detection value as an electrical signal to the control device 4. Here, examples of the physical quantities of the DC power include current, voltage, and the like. The power supply physical quantity detection unit 143 is provided in the power supply wirings 5, 50.

The control device 4 is configured to control the plurality of power converters 3 so that a production amount of hydrogen of the entire hydrogen production system 1, that is, a total production amount of hydrogen by the plurality of electrolyzers 2 constituting the hydrogen production system 1, approaches a predetermined target value. The control device 4 may be configured to perform feedback control using, for example, a detection value of a hydrogen detection unit 144. The control device 4 is electrically connected to the hydrogen detection unit 144, and when the detection value (that is, the production amount of hydrogen of the electrolyzer 2) is input from the hydrogen detection unit 144, the control device 4 compares the input detection value with the predetermined target value. Based on the comparison result, the control device 4 controls the plurality of power converters 3 while the detection value remains below the predetermined target value. Note that, as shown in FIG. 1, the hydrogen detection unit 144 can be provided downstream of the merging point of the hydrogen outlet flow paths 122 from the plurality of electrolyzers 2 in the flow direction of hydrogen.

Next, an example of a method for controlling the current supplied to the electrolyzer 2 in the control device 4 of the present embodiment will be described with reference to FIG. 2. Note that the power converter to be controlled, shown in FIG. 2, is the power converter 3 that supplies power to the measured electrolyzer 2S. In the present embodiment, as described above, the first and second electrolyzers 21, 22 correspond to the measured electrolyzer 2S. Therefore, the first and second power converters 31, 32 correspond to the power converters to be controlled shown in FIG. 2. Note that elements described in the block diagram of FIG. 2 correspond to functions (processes to be executed) realized by the processor 101 in the control device 4 executing a computer program PG previously stored in the memory 102 when the processor 101 controls the current supplied to the electrolyzer 2. Further, arrows shown in FIG. 2 indicate information input or information output when the processes are executed. Note that the processor 101 functions as a request output determination unit 401, an upper limit current calculation unit 402, a temperature estimation unit 403, a correction unit 404, a target current calculation unit 405, a Faraday efficiency calculation unit 406, a hydrogen production amount estimation unit 407, and an individual hydrogen target amount calculation unit 408, by executing the computer program PG previously stored in the memory 102. Furthermore, for example, at least one of the above-described functional units may be implemented by a circuit. This circuit may include one or more hardware logic circuits configured to execute specific processing.

For example, in the case of controlling the first power converter 31 that supplies power to the first electrolyzer 21, the control device 4 calculates (estimates) the production amount of hydrogen required for the first electrolyzer 21, the temperature of the first electrolyzer 21, an upper limit current of the first electrolyzer 21, and the like, and determines an requested output for the first power converter 31. Hereinafter, a method for determining the requested output (the requested output determination process executed by the control device 4) will be described, using the first power converter 31 as an example.

In FIG. 2, the request output determination unit 401 determines a requested output current for the first power converter 31. The requested output current is determined by comparing the upper limit current (that is, an upper limit current value) of the first electrolyzer 21 and a target (that is, a target current value) of the current to be supplied to the first electrolyzer 21, and selecting one of the upper limit current and the target current that has a lower current value based on a comparison result. Note that the request output determination unit 401 can also calculate the requested output as an output voltage by multiplying the requested output current by a predetermined coefficient.

The "upper limit current of the first electrolyzer 21" used in the request output determination unit 401 is calculated in the upper limit current calculation unit 402. The upper limit current calculation unit 402 calculates, as the upper limit current, a current value at which the temperature of the first electrolyzer 21 does not exceed an upper limit temperature at which the first electrolyzer 21 can operate normally (hereinafter also referred to as an "allowable upper limit temperature"). The allowable upper limit temperature is predetermined for each of the first and second electrolyzers 21, 22. That is, the allowable upper limit temperature of the first electrolyzer 21 is predetermined. The upper limit current calculation unit 402 calculates the upper limit current (upper limit current value) based on the above-described allowable upper limit temperature and a corrected estimated value of the present temperature of the first electrolyzer 21 (also referred to as a "corrected estimated temperature for the electrolyzer") provided by the temperature estimation unit 403 and the correction unit 404 described below. For example, the upper limit current can be calculated by multiplying a difference between the allowable upper limit temperature and the corrected estimated value of the present temperature of the first electrolyzer 21 by a constant value.

The temperature estimation unit 403 estimates the temperature of the first electrolyzer 21 and the temperature of the outlet gas (air (or oxygen) and hydrogen) discharged from the first electrolyzer 21 based on the detection values of the temperature and the flow rate of the inlet gas (gas and air as the raw material) introduced into the first electrolyzer 21 and a detection value of a current presently being supplied. The temperature and the flow rate of the gas can be estimated using the detection value detected by the inlet gas state detection unit 141. Further, the current presently being supplied can be estimated using the detection value detected by the power supply physical quantity detection unit 143. Further, the temperature estimation unit 403 estimates the temperature of the first electrolyzer 21 and the temperature of the outlet gas by taking into account physical characteristics, such as heat transfer and Joule heat, of the first electrolyzer 21, along with the above detection values. In the following description, an estimated value of the temperature of the first electrolyzer 21 estimated by the temperature estimation unit 403 is referred to as a base estimated temperature of the electrolyzer.

The correction unit 404 compares an estimated temperature value of the outlet gas estimated by the temperature estimation unit 403 with the temperature of the outlet gas actually detected by the outlet gas state detection unit 142. The correction unit 404 calculates a correction amount for the base estimated temperature of the electrolyzer based on the above comparison information (that is, a comparison result). The base estimated temperature of the electrolyzer is corrected to a corrected estimated value of the temperature of the electrolyzer based on the above correction amount. Then, the correction unit 404 outputs the corrected estimated temperature of the first electrolyzer 21 to the upper limit current calculation unit 402.

On the other hand, a "target current to be supplied to the first electrolyzer 21" used when the request output determination unit 401 determines the requested output is calculated by the target current calculation unit 405. The target current calculation unit 405 calculates a target current (target current value) to be supplied to the first electrolyzer 21 based on a target amount of hydrogen produced by the first electrolyzer 21 (required production amount of hydrogen) and the Faraday efficiency. That is, the target current calculation unit 405 can calculate the target current according to a formula of (target production amount of hydrogen) ÷ (Faraday efficiency) = (target current).

The Faraday efficiency is calculated by the Faraday efficiency calculation unit 406. The Faraday efficiency calculation unit 406 calculates the Faraday efficiency based on the production amount of hydrogen produced by the first electrolyzer 21 (estimated value of the present production amount of hydrogen) and the current supplied to the first electrolyzer 21 (in other words, the present output of the first power converter 31). That is, the Faraday efficiency calculation unit 406 can calculate the Faraday efficiency according to a formula of (present production amount of hydrogen) ÷ (present output current) = (Faraday efficiency). The Faraday efficiency calculation unit 406 outputs the calculated Faraday efficiency to the target current calculation unit 405. Note that the production amount of hydrogen may be the detection value detected by the outlet gas state detection unit 142 or an estimated value of the production amount of hydrogen provided by a hydrogen production amount estimation unit 407 described later.

The hydrogen production amount estimation unit 407 estimates the production amount of hydrogen based on an amount of oxygen detected by the outlet gas state detection unit 142. That is, the hydrogen production amount estimation unit 407 can estimate the production amount of hydrogen according to a formula of (amount of oxygen) × (stoichiometric mole ratio of hydrogen and oxygen) = (estimated value of production amount of hydrogen). Alternatively, the hydrogen production amount estimation unit 407 may estimate the production amount of hydrogen based on a first amount of water vapor detected by the inlet gas state detection unit 141 and a second amount of water vapor detected by the outlet gas state detection unit 142. That is, the hydrogen production amount estimation unit 407 can estimate the production amount of hydrogen according to a formula of {(first amount of water vapor) - (second amount of water vapor)} ÷ (stoichiometric mole ratio of hydrogen and water vapor) = (estimated value of production amount of hydrogen).

The "target amount of hydrogen produced by the first electrolyzer 21" is calculated by the individual hydrogen target amount calculation unit 408. The individual hydrogen target amount calculation unit 408 calculates the target production amount of hydrogen (individual hydrogen target amount) required for the first electrolyzer 21 based on a total target production amount of hydrogen required for the entire hydrogen production system 1 and a sharing ratio of hydrogen production for each of the first and second electrolyzers 21, 22. Regarding the sharing ratio of hydrogen production, it may be simply set to a ratio for equally dividing the total target production amount, or may be appropriately set according to each performance, device state, or the like of the first and second electrolyzers 21, 22.

In this way, the control device 4 determines the requested output current for the first power converter 31, and controls the first power converter 31 to supply the requested output current during hydrogen production from the first power converter 31 to the first electrolyzer 21.

Further, the control of the second power converter 32 performed by the control device 4 is performed in the same manner as the control of the first power converter 31 described above. That is, the control device 4 determines a requested output current for the second power converter 32, and controls the second power converter 32 to supply the requested output current during hydrogen production from the second power converter 32 to the second electrolyzer 22. The control device 4 calculates (estimates) a production amount of hydrogen required for the second electrolyzer 22, the temperature of the second electrolyzer 22, an upper limit current of the second electrolyzer 22, and the like, and determines a requested output for the second power converter 32.

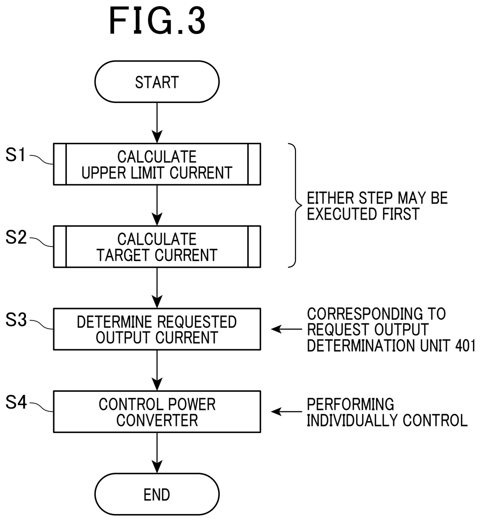

As described above, the control device 4 individually controls the plurality of power converters 3. Thereby, the control device 4 individually controls the current supplied to the plurality of electrolyzers 2. FIG. 3 is a flowchart illustrating a control process including the requested output determination process, which is executed by the control device 4 described in the block diagram of FIG. 2. First, the control device 4 calculates the upper limit current (upper limit current value) output by the first electrolyzer 21 (step S1). Next, the control device 4 calculates the target current (target current value) to be supplied to the first electrolyzer 21 (step S2). Next, the control device 4 determines the requested output current for the first power converter 31 based on the calculated upper limit current and the target current (step S3). Next, the control device 4 controls the power converter 31 to supply the current to the electrolyzer 21 based on the determined requested output current (step S4). The control device 4 individually controls the current supplied to the plurality of electrolyzers 2 by executing the same process for the second power converter 32. Note that FIG. 3 shows an example in which the calculation process for the upper limit current (step S1) is executed before the calculation process for the target current (step S2), but the present disclosure is not limited to this order. The calculation process for the target current (step S2) may be executed before the calculation process for the upper limit current (step S1).

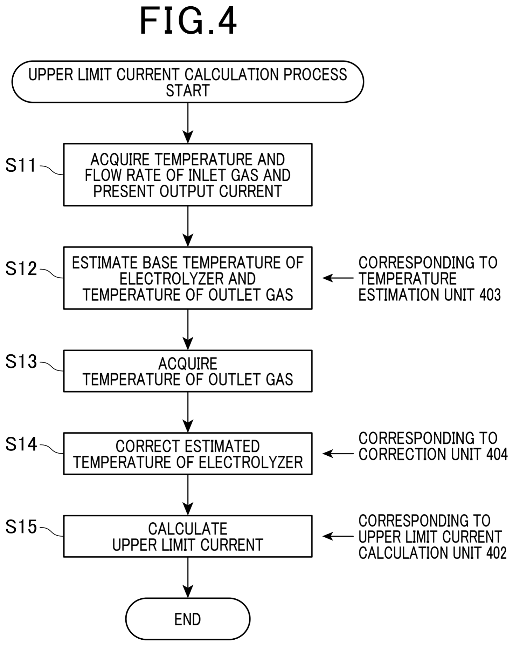

FIG. 4 is a flowchart illustrating the calculation process for the upper limit current (step S1) in the control process shown in FIG. 3. The control device 4 acquires the detection values of the temperature and the flow rate of the inlet gas (gas and air as the raw material) introduced into the first electrolyzer 21 and the detection value of the current presently being supplied (step S11). Next, the control device 4 estimates the base temperature (that is, "base estimated temperature") of the first electrolyzer 21 and the temperature of the outlet gas based on the information regarding the acquired detection values of the temperature and the flow rate of the inlet gas (gas and air as the raw material) and the acquired detection value of the current presently being supplied (step S12). Next, the control device 4 acquires the temperature of the outlet gas detected by the outlet gas state detection unit 142 (step S13). Next, the control device 4 corrects the base estimated temperature of the first electrolyzer 21 by comparing the estimated temperature value of the outlet gas with the detected temperature of the outlet gas (step S14). Next, the control device 4 calculates the upper limit current based on the corrected estimated temperature of the first electrolyzer 21 and the allowable upper limit temperature set for the first electrolyzer 21 (step S15).

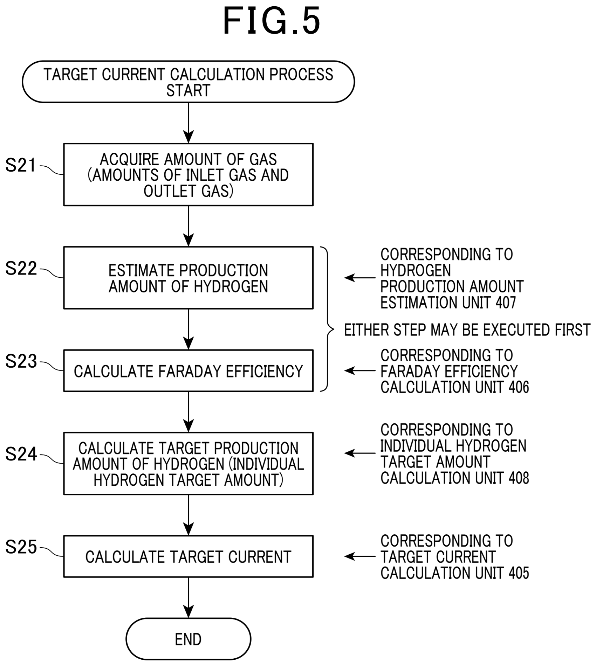

FIG. 5 is a flowchart illustrating the calculation process for the target current (step S2) in the control process shown in FIG. 3. The control device 4 acquires information regarding an amount of the outlet gas (oxygen and water vapor) and an amount of the inlet gas (water vapor) (step S21). Next, the control device 4 estimates the present production amount of hydrogen based on the acquired information, such as the amount of oxygen (step S22). Next, the control device 4 calculates the Faraday efficiency based on the estimated value of the present production amount of hydrogen and the present value of the output current (step S23). Next, the control device 4 acquires information regarding the total target production amount of hydrogen required for the entire hydrogen production system 1, that is, the first and second electrolyzers 21, 22, and calculates the target production amount of hydrogen (individual hydrogen target amount) of the first electrolyzer 21 (step S24). Next, the control device 4 calculates the target current value (requested output current) to be supplied to the first electrolyzer 21 based on the calculated value of the Faraday efficiency and the calculated value of the target production amount of hydrogen (step S25). Based on the requested output current determined by executing the above-described processes, the control device 4 controls the plurality of power converters 3 so that the total production amount of hydrogen produced by the plurality of electrolyzers 2 approaches the predetermined target value. Note that FIG. 5 shows an example in which the calculation process for the Faraday efficiency (step S23) is executed before the calculation process for the individual hydrogen target amount (step S24), but the present disclosure is not limited thereto. The calculation process for the individual hydrogen target amount (step S24) may be executed before the calculation process for the Faraday efficiency (step S23).

Advantageous effects of the hydrogen production system 1 of the present embodiment will be described. In the hydrogen production system 1, the different one of the power converters 31, 32 is connected to each of the first and second electrolyzers 21, 22. Then, the control device 4 individually controls the plurality of power converters 31, 32. Accordingly, the present system can individually control the current supplied from the plurality of power converters 3 to each of the first and second electrolyzers 21, 22. Therefore, the present system can expand the suppliable range of the current supplied to each of the first and second electrolyzers 21, 22 (can improve the flexibility of supply control for the current). As a result, it is possible to improve the production performance of hydrogen, which is provided by the plurality of electrolyzers 21, 22 (it becomes possible to increase the producible amount of hydrogen).

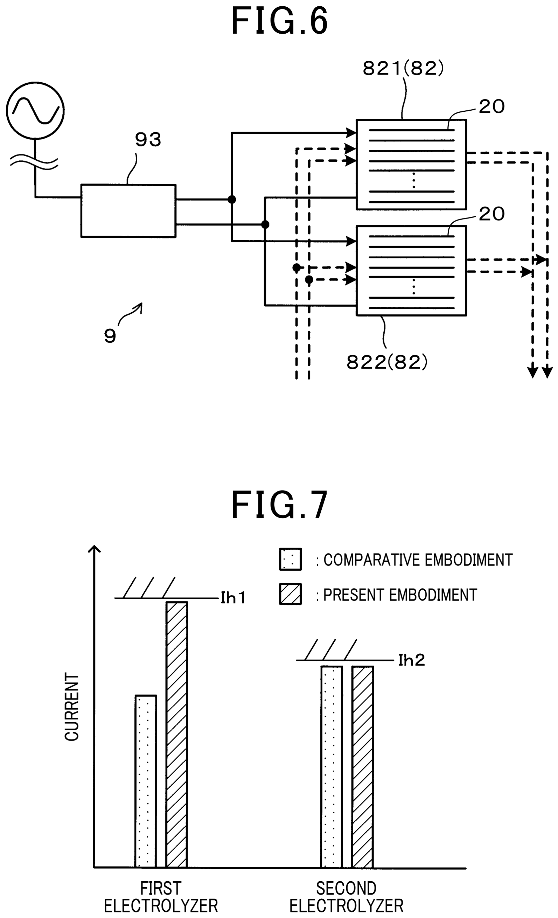

For example, FIG. 6 shows a hydrogen production system 9 of a comparative embodiment in which a plurality of electrolyzers 82 (a first electrolyzer 821 and a second electrolyzer 822) are connected to one power converter 93. This hydrogen production system 9 of the comparative embodiment cannot individually control the current supplied to each of the first and second electrolyzers 821, 822. Therefore, the hydrogen production system 9 of the comparative embodiment cannot obtain the above-described advantageous effects like the hydrogen production system 1 of the present disclosure. In each of the first and second electrolyzers 821, 822, there is an individual difference in upper limit currents (see upper limit currents Ih1, Ih2 in FIG. 7) at which the electrolyzer 82 can operate normally. Further, even in a configuration in which the first and second electrolyzers 821, 822 are connected in parallel to each other and connected to the power converter 93, current does not flow uniformly between the first electrolyzer 821 and the second electrolyzer 822 due to a difference in a flow rate of the introduced the gas as the raw material, individual differences in the temperature of the electrolyzers 82, individual differences in the electrical resistance of the electrolyzers 82, and the like. Further, variation also occurs in current distribution.

In such a situation, if it is attempted to supply the current to the first and second electrolyzers 821, 822 so as not to exceed the upper limit currents Ih1, Ih2, for example, as shown in the graph of "Comparative Embodiment" in FIG. 7, it becomes difficult to increase the supply current close to the respective upper limit currents Ih1, Ih2 of the first and second electrolyzers 821, 822. The example shown in this figure is an example of a situation where the current supplied to the first electrolyzer 821 cannot be increased close to the upper limit current Ih1 of the first electrolyzer 821.

In contrast, in the hydrogen production system 1 of the present embodiment (first embodiment), the current supplied to the first and second electrolyzers 21, 22 can be individually controlled by the configuration in which the first and second power converters 31, 32 are individually controlled. Therefore, as shown in the graph of "First Embodiment" in FIG. 7, it is possible to supply the current close to the upper limit currents Ih1, Ih2 also to the first and second electrolyzers 21, 22. As a result, the hydrogen production system 1 of the present embodiment can increase the production amount of hydrogen that can be produced even as the entire system. That is, in the hydrogen production system 1 of the present embodiment, a high production performance of hydrogen can be easily achieved.

Further, in the hydrogen production system 1 of the present embodiment, the control device 4 is configured to control the current supplied to the measured electrolyzer 2S based on the detection values detected by the inlet gas state detection unit 141, the outlet gas state detection unit 142, and the power supply physical quantity detection unit 143. Therefore, to the measured electrolyzer 2S, the appropriate current can be supplied while identifying the suppliable current for the measured electrolyzer 2S according to the gas state. The hydrogen production system 1 of the present embodiment can increase the production amount of hydrogen produced by the measured electrolyzer 2S. As a result, even as the entire system is considered, the producible amount of hydrogen can be increased, and the production performance of hydrogen can be easily improved.

Further, in the present embodiment, both the first and second electrolyzers 21, 22 (the plurality of electrolyzers 2) are the measured electrolyzer 2S. Therefore, in the hydrogen production system 1 of the present embodiment, the production amount of hydrogen can be increased for both the first and second electrolyzers 21, 22, and the production performance of the hydrogen can be improved as the entire system.

In the hydrogen production system 1 of the present embodiment, the control device 4 controls the plurality of power converters 3 so that the total production amount of hydrogen by the plurality of electrolyzers 2 approaches the predetermined target value. Therefore, the hydrogen production system 1 of the present embodiment can produce a desired amount of hydrogen.

As described above, according to the present embodiment, it is possible to provide the hydrogen production system, the hydrogen production method, and the program that can achieve improvement in the production performance of hydrogen (can increase the production amount of hydrogen that can be produced). Note that in the present embodiment, the configuration example in which the measured electrolyzer 2S has the inlet gas state detection unit 141, the outlet gas state detection unit 142, and the power supply physical quantity detection unit 143 has been shown, but the present disclosure is not limited to this configuration. The measured electrolyzer 2S can also be configured to have at least one of the plurality of detection units. For example, when the hydrogen production system has only the power supply physical quantity detection unit among the detection units, the requested output current may be calculated based on the current output current.

### (Second Embodiment)

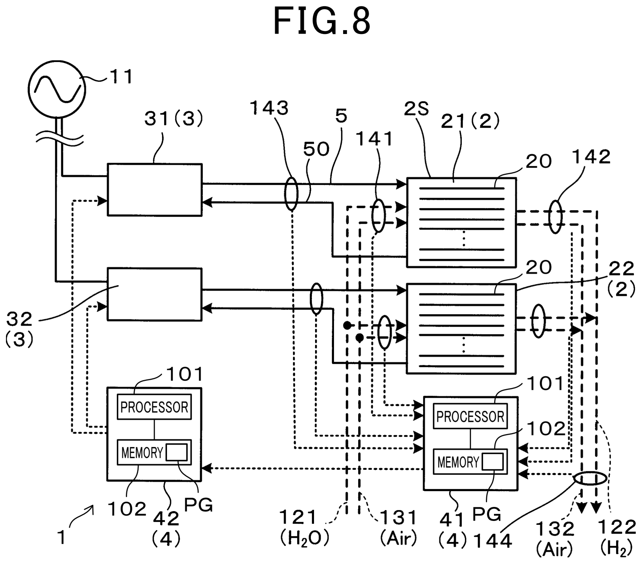

In the present embodiment, a configuration example in which a hydrogen production system 1 has a plurality of control devices 4 will be described. Specifically, as shown in FIG. 8, the hydrogen production system 1 is configured to have a first control device 41 and a second control device 42. The first control device 41 is connected to at least one detection unit of an inlet gas state detection unit 141, an outlet gas state detection unit 142, and a power supply physical quantity detection unit 143. The second control device 42 is connected to a plurality of power converters 3. The first control device 41 and the second control device 42 are connected to each other.

In the present embodiment, the first control device 41 is connected to the inlet gas state detection unit 141, the outlet gas state detection unit 142, and the power supply physical quantity detection unit 143. Then, each of the inlet gas state detection unit 141, the outlet gas state detection unit 142, and the power supply physical quantity detection unit 143 outputs (submits) a detection value (electrical signal) to the first control device 41. The first control device 41 calculates the current supplied to each of the first and second electrolyzers 21, 22, that is, an output current (requested output current) requested of each of the first and second power converters 31, 32, based on these detection values. The first control device 41 outputs the calculated requested output current to the second control device 42. In the first embodiment, the first control device 41 has a configuration that executes the control process described with reference to FIG. 2.

The second control device 42 controls driving each of the first and second power converters 31, 32 based on the requested output current calculated by the first control device 41. That is, the second control device 42 individually controls the first power converter 31 and the second power converter 32 so as to obtain the output current requested for each.

Each of the first control device 41 and the second control device 42 has a microcomputer including a processor 101, a memory 102, and the like, and peripheral circuits thereof. Other components are the same as the components of the first embodiment. Note that among reference signs used in the present embodiment (second embodiment) and subsequent embodiments, the same reference signs as those used in the previously described embodiment represent the same components and the like as those in the previously described embodiment, unless otherwise explained.

According to the configuration of the present embodiment, when the number of electrolyzers 2 included in the hydrogen production system 1 is modified, it is sufficient to modify the first control device 41. This allows configuring the hydrogen production system 1 without modifying the entire control configuration, including the second control device 42. Therefore, it is possible to respond to various system configurations while suppressing the implementation cost of the hydrogen production system 1. In addition, the hydrogen production system 1 of the present embodiment has the same advantageous effects as those of the system of the first embodiment.

### (Third Embodiment)

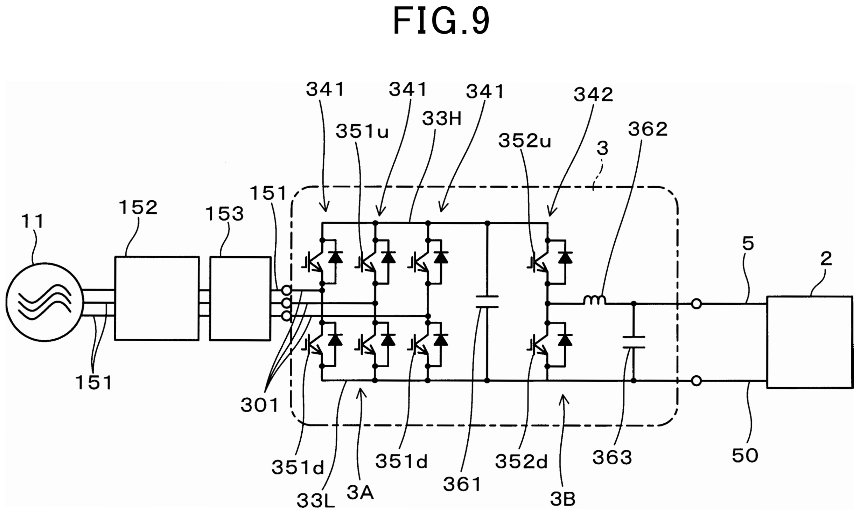

In the present embodiment, a configuration example of a plurality of power conversion devices 3 included in a hydrogen production system 1 will be described with reference to FIG. 9. Note that this figure shows one power converter 3. However, the hydrogen production system 1 includes the plurality of the power converters 3, and the plurality of power converters 3 are respectively connected to different electrolyzers 2. This matter is the same as the configuration of the first embodiment.

The power converter 3 includes a first power conversion unit 3A and a second power conversion unit 3B. The first power conversion unit 3A converts three-phase AC power into DC power. The second power conversion unit 3B converts the DC power converted by the first power conversion unit 3A into DC power of a different voltage. The first power conversion unit 3A and the second power conversion unit 3B are connected by a high-potential side wiring 33H and a low-potential side wiring 33L.

The first power conversion unit 3A has a plurality of first legs 341. The plurality of first legs 341 correspond to three or more legs connected in parallel with each other between the high-potential side wiring 33H and the low-potential side wiring 33L. Each first leg 341 is configured by connecting a first upper arm switch 351u and a first lower arm switch 351d in series. The first upper arm switch 351u corresponds to an upper arm switch connected to the high-potential side wiring 33H. The first lower arm switch 351d corresponds to a lower arm switch connected to the low-potential side wiring 33L.

A connection point between the first upper arm switch 351u and the first lower arm switch 351d in the first leg 341 is connected to an input wiring 301 into which three-phase AC power is input. A DC link capacitor 361 is connected between the first power conversion unit 3A and the second power conversion unit 3B, and between the high-potential side wiring 33H and the low-potential side wiring 33L.

The second power conversion unit 3B has one second leg 342 and one reactor 362. The second leg 342 corresponds to a leg connected between the high-potential side wiring 33H and the low-potential side wiring 33L. The second leg 342 is configured by connecting a second upper arm switch 352u and a second lower arm switch 352d in series. The second upper arm switch 352u corresponds to the upper arm switch connected to the high-potential side wiring 33H. The second lower arm switch 352d corresponds to the lower arm switch connected to the low-potential side wiring 33L. A capacitor 363 is connected between a pair of power supply wirings 5, 50 on a side closer to the electrolyzer 2 than the reactor 362.

The reactor 362 is connected between a connection point of the second upper arm switch 352u and the second lower arm switch 352d in the second leg 342, and a connection point of the power supply wiring 5 with the electrolyzer 2. The low-potential side wiring 33L is connected to the power supply wiring 50. The power supply wiring 5 is connected to a positive electrode of the electrolyzer 2. The power supply wiring 50 is connected to a negative electrode of the electrolyzer 2.

The input wiring 301 is connected to a supply wiring 151 of three-phase AC power from a three-phase AC power source 11. The supply wiring 151 is provided with a precharge circuit 152 and a filter circuit 153. The precharge circuit 152 includes, for example, a switch and a resistor, and prevents an inrush current flowing from the three-phase AC power source 11 to the power converter 3. The filter circuit 153 includes, for example, an inductor and a capacitor, and removes noise components and the like of the three-phase AC power supplied from the three-phase AC power source 11. Note that the three-phase AC power source 11 corresponds to, for example, a power grid.

The first power conversion unit 3A of the power converter 3 converts input three-phase AC power into DC power and outputs it through appropriate switching operations of the plurality of first upper arm switches 351u and the plurality of first lower arm switches 351d. The DC link capacitor 361 is charged with the DC power after output. Then, the second power conversion unit 3B of the power converter 3 converts the converted DC power into DC power at an appropriate voltage and outputs it through appropriate switching operations of the second upper arm switch 352u and the second lower arm switch 352d. The DC power after output is supplied to the electrolyzer 2.

A freewheeling diode is connected in anti-parallel to each of the first upper arm switch 351u, the first lower arm switch 351d, the second upper arm switch 352u, and the second lower arm switch 352d. Each switching operation of the first upper arm switch 351u, the first lower arm switch 351d, the second upper arm switch 352u, and the second lower arm switch 352d is controlled by a drive signal output (submitted) from the control device 4. Note that the first upper arm switch 351u, the first lower arm switch 351d, the second upper arm switch 352u, and the second lower arm switch 352d can be configured by, for example, an IGBT (Insulated Gate Bipolar Transistor), a MOSFET (Metal-Oxide-Semiconductor Field-Effect Transistor), or the like. Other configurations are the same as the configurations of the first embodiment.

According to the configuration of the present embodiment, by having the power converter 3, it is possible to easily convert three-phase AC power into desired DC power. In addition, the power converter 3 of the present embodiment can also be realized by repurposing a power converter for a vehicle, such as an electric vehicle, as a power converter of the hydrogen production system 1. That is, the power converter for the vehicle is connected between a drive battery and a drive motor of the vehicle. In the power converter for the vehicle, the electrolyzer 2 is connected to a side to which the drive battery is connected, and the three-phase AC power source 11 is connected to a side to which the drive motor is connected. Thereby, the power converter for the vehicle can be used as the power converter of the hydrogen production system 1. In addition, the hydrogen production system 1 of the present embodiment has the same advantageous effects as those of the system of the first embodiment.

### (Fourth Embodiment)

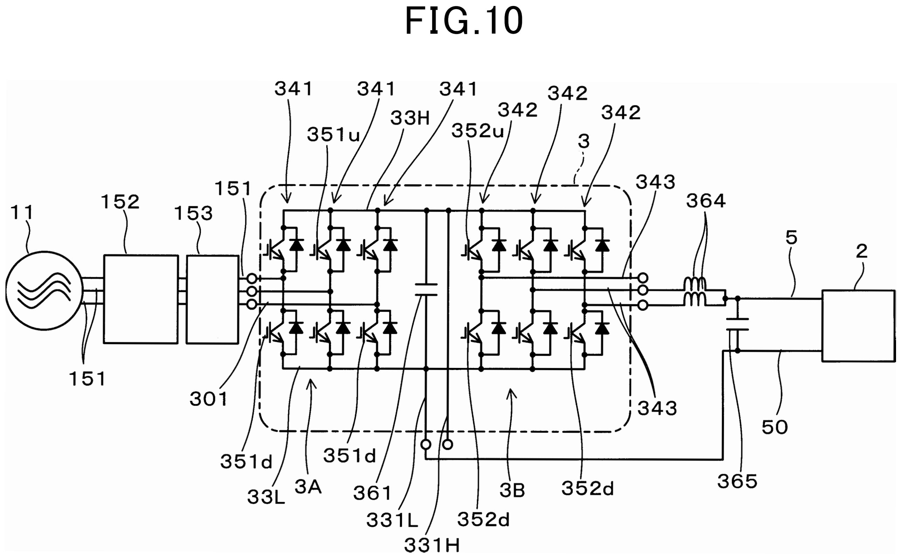

The present embodiment is a modification of the third embodiment. In the present embodiment, another configuration example of a plurality of power converters 3 included in a hydrogen production system 1 will be described with reference to FIG. 10. In the present embodiment, a second power conversion unit 3B of the power converter 3 has a plurality of second legs 342. In the present embodiment, in particular, a configuration example in which the second power conversion unit 3B has three second legs 342 is shown.

Three output wirings 343 are respectively connected to three connection points between three second upper arm switches 352u and three second lower arm switches 352d in the three second legs 342. Two of the three output wirings 343 are connected to a power supply wiring 5, which is connected to a positive electrode of the electrolyzer 2 via a reactor 364. The remaining one of the three output wirings 343 is an idle wiring.

The low-potential side wiring 33L is connected to the power supply wiring 50 connected to the negative electrode of the electrolyzer 2 via an extraction wiring 331L. A filter capacitor 365 is connected between the power supply wiring 5 and the power supply wiring 50. Note that the extraction wiring 331H is also connected to the high-potential side wiring 33H, but the extraction wiring 331H is the idle wiring.

The second power conversion unit 3B of the power converter 3 converts DC power after conversion by a first power conversion unit 3A into DC power of an appropriate voltage and outputs it through appropriate switching operations of the plurality of second upper arm switches 352u and the plurality of second lower arm switches 352d. However, the second upper arm switch 352u and the second lower arm switch 352d of the second leg 342, to which the output wiring 343 that is the idle wiring is connected, do not particularly perform switching operations. Both switches are in an open state (that is, "cutoff state"). Other configurations are the same as the configurations of the third embodiment. The hydrogen production system 1 of the present embodiment has the same advantageous effects as those of the system of the third embodiment.

In the above-described embodiments, the configuration in which the hydrogen production system 1 has two electrolyzers 21, 22 and two power converters 31, 32 has been described, but the present disclosure is not limited to this configuration. For example, the hydrogen production system 1 may be configured to have three or more electrolyzers and three or more power converters.

Further, in the above-described embodiments, the configuration in which all the electrolyzers 2 are the measured electrolyzer 2S has been described, but the present disclosure is not limited to this configuration. For example, in a case where the hydrogen production system 1 has three electrolyzers 2, one of the three electrolyzers 2 may be the measured electrolyzer 2S, and the remaining two may be the electrolyzers 2 that are not the measured electrolyzer 2S. Alternatively, in a case where the hydrogen production system 1 has three electrolyzers 2, two of the three electrolyzers 2 may be the measured electrolyzer 2S, and the remaining one may be the electrolyzer 2 that is not the measured electrolyzer 2S. Note that "the electrolyzer 2 that is not the measured electrolyzer 2S" corresponds to an electrolyzer in which none of the inlet gas state detection unit 141, the outlet gas state detection unit 142, and the power supply physical quantity detection unit 143 are disposed.

The technology of the present disclosure is not limited to the contents of the above-described embodiments, and can be applied to various embodiments without departing from the scope of the spirit thereof.

Aspects of the technology of the present disclosure are shown below.

### [Aspect 1]

A hydrogen production system (1) including:
a plurality of electrolyzers (2, 21, 22) which are configured to produce hydrogen by electrolyzing a raw material;
a plurality of power converters (3, 31, 32) which are configured to convert three-phase AC power into DC power and supply the DC power to the electrolyzers; and
a control device (4) which is configured to control the plurality of power converters, in which
each of the plurality of electrolyzers is connected to a different one of the power converters,
at least one of the plurality of electrolyzers is a measured electrolyzer (2S) provided with at least one detection unit of:
   an inlet gas state detection unit (141) which is configured to detect a physical quantity indicating a state of an inlet gas,
   an outlet gas state detection unit (142) which is configured to detect a physical quantity indicating a state of an outlet gas, and
   a power supply physical quantity detection unit (143) which is configured to detect a physical quantity of supplied DC power, and
the control device is configured to:
   individually control a current or a voltage supplied from the plurality of power converters to each of the plurality of electrolyzers by individually controlling the plurality of power converters; and
   control the current or the voltage supplied from the power converter to the measured electrolyzer based on a detection value detected by at least one detection unit of the inlet gas state detection unit, the outlet gas state detection unit, and the power supply physical quantity detection unit.

### [Aspect 2]

The hydrogen production system according to Aspect 1, in which
each of the plurality of electrolyzers is the measured electrolyzer.

### [Aspect 3]

The hydrogen production system according to Aspect 1 or 2, in which:
the power converter includes:
   a first power conversion unit (3A) which is configured to convert the three-phase AC power into DC power, and
   a second power conversion unit (3B) which is configured to convert the DC power converted by the first power conversion unit into DC power of a different voltage;
the first power conversion unit and the second power conversion unit are connected by a high-potential side wiring (33H) and a low-potential side wiring (33L);
the first power conversion unit has three or more legs (341) connected in parallel with each other between the high-potential side wiring and the low-potential side wiring;
each of the legs is configured by connecting an upper arm switch (351u) which is connected to the high-potential side wiring and a lower arm switch (351d) which is connected to the low-potential side wiring in series; and
a connection point between the upper arm switch and the lower arm switch in the leg is connected to an input wiring (301) into which the three-phase AC power is input.

### [Aspect 4]

The hydrogen production system according to any one of Aspects 1 to 3, including, as the control device:
a first control device (41) which is connected to at least one detection unit of the inlet gas state detection unit, the outlet gas state detection unit, and the power supply physical quantity detection unit; and
a second control device (42) which is connected to at least one of the power converters, in which
the first control device and the second control device are connected to each other.

### [Aspect 5]

The hydrogen production system according to any one of Aspects 1 to 4, in which
the inlet gas state detection unit is configured to detect at least one physical quantity related to a flow rate, pressure, temperature, and concentration of at least one gas component of hydrogen, oxygen, and water vapor in the inlet gas.

### [Aspect 6]

The hydrogen production system according to any one of Aspects 1 to 5, in which
the outlet gas state detection unit is configured to detect at least one physical quantity related to a flow rate, pressure, temperature, and concentration of at least one gas component of hydrogen, oxygen, and water vapor in the outlet gas.

### [Aspect 7]

The hydrogen production system according to any one of Aspects 1 to 6, in which
the control device is configured to control the plurality of power converters so that a total production amount of the hydrogen by the plurality of electrolyzers approaches a predetermined target value.

### [Aspect 8]

The hydrogen production system according to any one of Aspects 1 to 7, in which
when individually controlling the plurality of power conversion devices,
the control device is configured to:
   compare an upper limit current of the electrolyzer and a target current to be supplied to the electrolyzer; and
   determine an output current requested of the power conversion device by selecting one of the upper limit current and the target current that has a lower current value based on a comparison result.

### [Aspect 9]

The hydrogen production system according to Aspect 8, in which
the control device is configured to:
calculate an estimated temperature of the electrolyzer based on a detection value detected by the inlet gas state detection unit; and
based on the calculated estimated temperature of the electrolyzer and an allowable upper limit temperature indicating an upper limit temperature at which the electrolyzer can operate normally, calculate, as the upper limit current, a current value at which the estimated temperature does not exceed the allowable upper limit temperature.

### [Aspect 10]

The hydrogen production system according to Aspect 9, in which
the control device is configured to:
compare the estimated temperature of the electrolyzer and a temperature of the outlet gas, which is the detection value detected by the outlet gas state detection unit;
correct the estimated temperature based on a comparison result; and
calculate the upper limit current based on the corrected estimated temperature and the allowable upper limit temperature.

### [Aspect 11]

The hydrogen production system according to any one of Aspects 8 to 10, in which
the control device is configured to calculate the target current based on a target amount of the hydrogen produced by the electrolyzer.

### [Aspect 12]

The hydrogen production system according to Aspect 11, in which
the control device is configured to:
calculate an estimated value of a production amount of the hydrogen based on the detection value detected by at least one detection unit of the inlet gas state detection unit and the outlet gas state detection unit;
calculate Faraday efficiency based on the calculated estimated value of the production amount of the hydrogen and a supply current to the electrolyzer; and
calculate the target current based on the target amount of the hydrogen produced by the electrolyzer and the calculated Faraday efficiency.

### [Aspect 13]

A hydrogen production method for producing hydrogen by using a hydrogen production system (1) having:
a plurality of electrolyzers (2, 21, 22) which are configured to produce the hydrogen by electrolyzing a raw material; and
a plurality of power converters (3, 31, 32) which are configured to convert three-phase AC power into DC power and supply the DC power to the electrolyzers, in which
each of the plurality of electrolyzers is connected to a different one of the power converters,
at least one of the plurality of electrolyzers is a measured electrolyzer (2S) provided with at least one detection unit of:
   an inlet gas state detection unit (141) which is configured to detect a physical quantity indicating a state of an inlet gas,
   an outlet gas state detection unit (142) which is configured to detect a physical quantity indicating a state of an outlet gas, and
   a power supply physical quantity detection unit (143) which is configured to detect a physical quantity of supplied DC power,
the hydrogen production method including:
   individually controlling a current or a voltage supplied from the plurality of power converters to each of the plurality of electrolyzers by individually controlling the plurality of power converters; and
   controlling the current or the voltage supplied from the power converter to the measured electrolyzer based on a detection value detected by at least one detection unit of the inlet gas state detection unit, the outlet gas state detection unit, and the power supply physical quantity detection unit.

### [Aspect 14]

The hydrogen production method according to Aspect 13, in which
producing the hydrogen by using the hydrogen production system in which each of the plurality of electrolyzers is the measured electrolyzer.

### [Aspect 15]

The hydrogen production method according to Aspect 13 or 14, in which producing the hydrogen by using the hydrogen production system in which:
the power converter includes:
   a first power conversion unit (3A) which is configured to convert the three-phase AC power into DC power, and
   a second power conversion unit (3B) which is configured to convert the DC power converted by the first power conversion unit into DC power of a different voltage;
the first power conversion unit and the second power conversion unit are connected by a high-potential side wiring (33H) and a low-potential side wiring (33L);
the first power conversion unit has three or more legs (341) connected in parallel with each other between the high-potential side wiring and the low-potential side wiring;
each of the legs is configured by connecting an upper arm switch (351u) which is connected to the high-potential side wiring and a lower arm switch (351d) which is connected to the low-potential side wiring in series; and
a connection point between the upper arm switch and the lower arm switch in the leg is connected to an input wiring (301) into which the three-phase AC power is input.

### [Aspect 16]

The hydrogen production method according to any one of Aspects 13 to 15, further including
detecting, by the inlet gas state detection unit, at least one physical quantity related to a flow rate, pressure, temperature, and concentration of at least one gas component of hydrogen, oxygen, and water vapor in the inlet gas.

### [Aspect 17]

The hydrogen production method according to any one of Aspects 13 to 16, further including
detecting, by the outlet gas state detection unit, at least one physical quantity related to a flow rate, pressure, temperature, and concentration of at least one gas component of hydrogen, oxygen, and water vapor in the outlet gas.

### [Aspect 18]

The hydrogen production method according to any one of Aspects 13 to 17, further including
controlling the plurality of power converters so that a total production amount of the hydrogen by the plurality of electrolyzers approaches a predetermined target value.

### [Aspect 19]

The hydrogen production method according to any one of Aspects 13 to 18, further including
when individually controlling the plurality of power conversion devices,
comparing an upper limit current of the electrolyzer and a target current to be supplied to the electrolyzer; and
determining an output current requested of the power conversion device by selecting one of the upper limit current and the target current that has a lower current value based on a comparison result.

### [Aspect 20]

The hydrogen production method according to Aspect 19, in which
calculating an estimated temperature of the electrolyzer based on a detection value detected by the inlet gas state detection unit; and
based on the calculated estimated temperature of the electrolyzer and an allowable upper limit temperature indicating an upper limit temperature at which the electrolyzer can operate normally, calculating, as the upper limit current, a current value at which the estimated temperature does not exceed the allowable upper limit temperature.

### [Aspect 21]

The hydrogen production method according to Aspect 20, in which
comparing the estimated temperature of the electrolyzer and a temperature of the outlet gas, which is the detection value detected by the outlet gas state detection unit;
correcting the estimated temperature based on a comparison result; and
calculating the upper limit current based on the corrected estimated temperature and the allowable upper limit temperature.

### [Aspect 22]

The hydrogen production method according to any one of Aspects 19 to 21, in which
calculating the target current based on a target amount of the hydrogen produced by the electrolyzer.

### [Aspect 23]

The hydrogen production method according to Aspect 22, in which
calculating an estimated value of a production amount of the hydrogen based on the detection value detected by at least one detection unit of the inlet gas state detection unit and the outlet gas state detection unit;
calculating Faraday efficiency based on the calculated estimated value of the production amount of the hydrogen and a supply current to the electrolyzer; and
calculating the target current based on the target amount of the hydrogen produced by the electrolyzer and the calculated Faraday efficiency.

### [Aspect 24]

A program that is executed when hydrogen is produced by using a hydrogen production system (1) having:
a plurality of electrolyzers (2, 21, 22) which are configured to produce the hydrogen by electrolyzing a raw material;
a plurality of power converters (3, 31, 32) which are configured to convert three-phase AC power into DC power and supply the DC power to the electrolyzers; and
a control device (4) which is configured to control the plurality of power converters, in which
each of the plurality of electrolyzers is connected to a different one of the power converters,
at least one of the plurality of electrolyzers is a measured electrolyzer (2S) provided with at least one detection unit of:
   an inlet gas state detection unit (141) which is configured to detect a physical quantity indicating a state of an inlet gas,
   an outlet gas state detection unit (142) which is configured to detect a physical quantity indicating a state of an outlet gas, and
   a power supply physical quantity detection unit (143) which is configured to detect a physical quantity of supplied DC power,
   the program causing the control device to execute instructions including:
   individually controlling a current or a voltage supplied from the plurality of power converters to each of the plurality of electrolyzers by individually controlling the plurality of power converters; and
   controlling the current or the voltage supplied from the power converter to the measured electrolyzer based on a detection value detected by at least one detection unit of the inlet gas state detection unit, the outlet gas state detection unit, and the power supply physical quantity detection unit.

### [Aspect 25]

The program according to Aspect 24, in which
causing the control device to calculate the target current based on a target amount of the hydrogen produced by the electrolyzer.

In the present disclosure and in the claims, the term "processor" refers to one or more hardware processors configured to execute processing defined by computer program code included in a computer program, by successively loading the computer program code (that is, one or more instructions of the computer program). In other words, the "processor" is a hardware device that executes one or more programmed processes. Accordingly, the computer program code may be regarded as software capable of defining the processing performed by the processor, depending on its content. The "processor" may be a general-purpose or a dedicated processor, such as a CPU, microprocessor, GPU, or DFP (Data Flow Processor), but is not limited thereto.

The term "memory" refers to one or more non-transitory tangible computer-readable storage medium, which are hardware memories configured to store computer program code and/or data in a manner accessible by a processor. The "memory" may be implemented using memory technologies and architectures such as SRAM, SDRAM, non-volatile memory, flash memory, or other types of memory.

In the present disclosure and in the claims, the term "circuit" refers to one or more hardware logic circuits configured to execute specific processing based on a predefined circuit design. In other words, the term "circuit" in the present disclosure and claims does not refer to a device in which processing is defined by software such as the above-described computer program code. Instead, it refers to a hardware device that executes specific processing based on its circuit configuration. For example, the "circuit" may include custom integrated circuits such as ASICs (Application Specific Integrated Circuits) or FPGAs (Field Programmable Gate Arrays) designed using a hardware description language (HDL). Accordingly, the term "circuit" as used in the present disclosure and claims includes all hardware circuits except for the above-described processors that execute processing by loading computer program code.

## Claims

1. A hydrogen production system (1) comprising:
a plurality of electrolyzers (2, 21, 22) which are configured to produce hydrogen by electrolyzing a raw material;
a plurality of power converters (3, 31, 32) which are configured to convert three-phase AC power into DC power and supply the DC power to the electrolyzers; and
a control device (4) which is configured to control the plurality of power converters, wherein
each of the plurality of electrolyzers is connected to a different one of the power converters,
at least one of the plurality of electrolyzers is a measured electrolyzer (2S) provided with at least one detection unit of:
an inlet gas state detection unit (141) which is configured to detect a physical quantity indicating a state of an inlet gas,
an outlet gas state detection unit (142) which is configured to detect a physical quantity indicating a state of an outlet gas, and
a power supply physical quantity detection unit (143) which is configured to detect a physical quantity of supplied DC power, and
the control device is configured to:
individually control a current or a voltage supplied from the plurality of power converters to each of the plurality of electrolyzers by individually controlling the plurality of power converters; and
control the current or the voltage supplied from the power converter to the measured electrolyzer based on a detection value detected by at least one detection unit of the inlet gas state detection unit, the outlet gas state detection unit, and the power supply physical quantity detection unit.

2. The hydrogen production system according to claim 1, wherein
each of the plurality of electrolyzers is the measured electrolyzer.

3. The hydrogen production system according to claim 1 or 2, wherein:
the power converter includes:
a first power conversion unit (3A) which is configured to convert the three-phase AC power into DC power, and
a second power conversion unit (3B) which is configured to convert the DC power converted by the first power conversion unit into DC power of a different voltage;
the first power conversion unit and the second power conversion unit are connected by a high-potential side wiring (33H) and a low-potential side wiring (33L);
the first power conversion unit has three or more legs (341) connected in parallel with each other between the high-potential side wiring and the low-potential side wiring;
each of the legs is configured by connecting an upper arm switch (351u) which is connected to the high-potential side wiring and a lower arm switch (351d) which is connected to the low-potential side wiring in series; and
a connection point between the upper arm switch and the lower arm switch in the leg is connected to an input wiring (301) into which the three-phase AC power is input.

4. The hydrogen production system according to any one of claims 1 to 3, comprising, as the control device:
a first control device (41) which is connected to at least one detection unit of the inlet gas state detection unit, the outlet gas state detection unit, and the power supply physical quantity detection unit; and
a second control device (42) which is connected to at least one of the power converters, wherein
the first control device and the second control device are connected to each other.

5. The hydrogen production system according to any one of claims 1 to 4, wherein
the inlet gas state detection unit is configured to detect at least one physical quantity related to a flow rate, pressure, temperature, and concentration of at least one gas component of hydrogen, oxygen, and water vapor in the inlet gas.

6. The hydrogen production system according to any one of claims 1 to 5, wherein
the outlet gas state detection unit is configured to detect at least one physical quantity related to a flow rate, pressure, temperature, and concentration of at least one gas component of hydrogen, oxygen, and water vapor in the outlet gas.

7. The hydrogen production system according to any one of claims 1 to 6, wherein
the control device is configured to control the plurality of power converters so that a total production amount of the hydrogen by the plurality of electrolyzers approaches a predetermined target value.

8. A hydrogen production method for producing hydrogen by using a hydrogen production system (1) having:
a plurality of electrolyzers (2, 21, 22) which are configured to produce the hydrogen by electrolyzing a raw material; and
a plurality of power converters (3, 31, 32) which are configured to convert three-phase AC power into DC power and supply the DC power to the electrolyzers, wherein
each of the plurality of electrolyzers is connected to a different one of the power converters,
at least one of the plurality of electrolyzers is a measured electrolyzer (2S) provided with at least one detection unit of:
an inlet gas state detection unit (141) which is configured to detect a physical quantity indicating a state of an inlet gas,
an outlet gas state detection unit (142) which is configured to detect a physical quantity indicating a state of an outlet gas, and
a power supply physical quantity detection unit (143) which is configured to detect a physical quantity of supplied DC power,
the hydrogen production method comprising:
individually controlling a current or a voltage supplied from the plurality of power converters to each of the plurality of electrolyzers by individually controlling the plurality of power converters; and
controlling the current or the voltage supplied from the power converter to the measured electrolyzer based on a detection value detected by at least one detection unit of the inlet gas state detection unit, the outlet gas state detection unit, and the power supply physical quantity detection unit.

9. The hydrogen production method according to claim 8, further comprising
controlling the plurality of power converters so that a total production amount of hydrogen by the plurality of electrolyzers approaches a predetermined target value.

10. The hydrogen production method according to claim 8 or 9, further comprising
when individually controlling the plurality of power conversion devices,
comparing an upper limit current of the electrolyzer and a target current to be supplied to the electrolyzer; and
determining an output current requested of the power conversion device by selecting one of the upper limit current and the target current that has a lower current value based on a comparison result.

11. The hydrogen production method according to claim 10, wherein
calculating an estimated temperature of the electrolyzer based on a detection value detected by the inlet gas state detection unit; and
based on the calculated estimated temperature of the electrolyzer and an allowable upper limit temperature indicating an upper limit temperature at which the electrolyzer can operate normally, calculating, as the upper limit current, a current value at which the estimated temperature does not exceed the allowable upper limit temperature.

12. The hydrogen production method according to claim 11, wherein
comparing the estimated temperature of the electrolyzer and a temperature of the outlet gas, which is the detection value detected by the outlet gas state detection unit;
correcting the estimated temperature based on a comparison result; and
calculating the upper limit current based on the corrected estimated temperature and the allowable upper limit temperature.

13. The hydrogen production method according to any one of claims 10 to 12, wherein
calculating the target current based on a target amount of hydrogen produced by the electrolyzer.

14. The hydrogen production method according to claim 13, wherein
calculating an estimated value of a production amount of hydrogen based on the detection value detected by at least one detection unit of the inlet gas state detection unit and the outlet gas state detection unit;
calculating Faraday efficiency based on the calculated estimated value of the production amount of hydrogen and a supply current to the electrolyzer; and
calculating the target current based on the target amount of hydrogen produced by the electrolyzer and the calculated Faraday efficiency.

15. A program that is executed when hydrogen is produced by using a hydrogen production system (1) having:
a plurality of electrolyzers (2, 21, 22) which are configured to produce hydrogen by electrolyzing a raw material;
a plurality of power converters (3, 31, 32) which are configured to convert three-phase AC power into DC power and supply the DC power to the electrolyzers; and
a control device (4) which is configured to control the plurality of power converters, wherein
each of the plurality of electrolyzers is connected to a different one of the power converters,
at least one of the plurality of electrolyzers is a measured electrolyzer (2S) provided with at least one detection unit of:
an inlet gas state detection unit (141) which is configured to detect a physical quantity indicating a state of an inlet gas,
an outlet gas state detection unit (142) which is configured to detect a physical quantity indicating a state of an outlet gas, and
a power supply physical quantity detection unit (143) which is configured to detect a physical quantity of supplied DC power,
the program causing the control device to execute instructions including:
individually controlling a current or a voltage supplied from the plurality of power converters to each of the plurality of electrolyzers by individually controlling the plurality of power converters; and
controlling the current or the voltage supplied from the power converter to the measured electrolyzer based on a detection value detected by at least one detection unit of the inlet gas state detection unit, the outlet gas state detection unit, and the power supply physical quantity detection unit.
